# EUROPEAN PATENT APPLICATION

(11) **EP 1 363 144 A1**
(43) Date of publication of application: **19.11.2003**
(21) Application number: 03010787.4
(22) Date of filing: 14.05.2003
(51) Int. Cl.: G02B 5/30, G02F 1/13363

(54) **Achromatic quarter wave film**

(30) Priority: 17.05.2002 EP 02010985
(71) Applicant: MERCK PATENT GmbH, 64293 Darmstadt (DE); LG Chemical Ltd., Seoul 150-721 (KR)
(72) Inventor: Skjonnemand, Karl, Dr., Holburn Southampton SO45 2PD (GB); Slaney, Kim, Dorset BH23 1QX (GB); Verrall, Mark, Dr., Salisbury SP1 3AA (GB); Su Yu, Jeong, Yusung-gu, 305-707 Daejon (KR); Park, Moon Soo, Seo-gu, 302-743 Daejon (KR); Jeon, Byoung Kun, 312-912 Chungcheonganam-do (KR)
(74) Representative: Schüttler, Reinhard, Dr.

(57) **Abstract**

The invention relates to an achromatic quarter wave film (AQWF) comprising at least one quarter wave film (44) (QWF) and at least one half wave film (42) (HWF), each of said QWF and HWF comprising polymerized or vitrified anisotropic material, to methods and materials for the preparation of the AQWF, its use in optical devices like compensators and liquid crystal displays, and to a liquid crystal display comprising such an AQWF.

## Description

### Field of Invention

The invention relates to an achromatic quarter wave film (AQWF) comprising at least one quarter wave film (QWF) and at least one half wave film (HWF), each of said QWF and HWF comprising polymerized or vitrified liquid crystalline material. The invention further relates to methods and materials for the preparation of the AQWF, its use in optical devices like compensators and liquid crystal displays, and to a liquid crystal display comprising such an AQWF.

### Background and Prior Art

Quarter wave retardation films (QWFs, 1/4 waveplates or λ/4 films) are known in prior art. A QWF creates a phase difference of π/2 in two linearly polarized light rays having vibration planes perpendicular to each other, and thus convert for example linearly polarized light into circular polarized light or vice versa. It typically consists of a polymer film that is stretched uniaxially to give anisotropic optical properties, and can be used as optical phase retarders for example in liquid crystal displays (LCD) or other optical systems. However, as the retardation of a conventional QWF, for example made of stretched polycarbonate (PC), varies with the wavelength of light, it can be used only in a narrow wavelength range

Achromatic QWFs (AQWFs) are also known in prior art. An AQWFs (or broad band QWF) converts linearly polarized light into circular polarized light at all visible wavelengths, which is a considerable advantage for many applications. For example, if an AQWF is used instead of conventional QWF in a reflective or transflective LCD, the contrast ratio of the LCD increases sharply.

In prior art several methods are known how to create an AQWF. For example, stretched 1/2 and 1/4 waveplates of materials with different birefringence dispersion were laminated with their optical axis orthogonal to each other to form an AQWF (for example in S. Pancharatnama, *The proceedings of the Indian Academy of Science,* Vol. XLI, No. 4, Sec. A, 1955). Furthermore, an AQWF comprising stretched 1/4 waveplate films made of a mixture of positive and negative photoelastic polymers has been described (A. Uchiyama, T. Yatabe; *SID 01 Digest,* 566, 2001). Also, stretched 1/2 and 1/4 waveplate films made of materials with the same birefringence dispersion were arranged with their optical axis at an angle of 60° ti give an AQWF (M. Okamoto, K. Minoura, S. Mitsui, *IDW99*, 49, 1999). Furthermore, AQWFs comprising laminated waveplates comprising one or more stretched 1/2 waveplates and one or more stretched 1/4 waveplates arranged at various angles have been disclosed for example in JP-A-05-100114, US 6,025,958 and EP-A-0 989 441. US 6,400,433 describes a circularly polarizing plate comprising a linear polarizer and a QWF comprising two optically anisotropic layers made from homeotropically aligned discotic liquid crystal molecules.

However, the performance of the AQWFs of prior art is still not satisfying for specific applications. Also, QWFs of stretched polymer films often have only moderate birefringence and therefore require high thickness to give the necessary optical retardation. In particular in case of laminated waveplates the use of more than two films is expensive, raises manufacturing problems and leads to undesirable high thickness of the AQWF, which is a disadvantage especially for use in flat panel LCDs. On the other hand, optical films comprising homeotropically aligned discotic liquid crystal molecules as described in prior art are often difficult to manufacture on a large scale.

One aim of the present invention is to provide an achromatic quarter wave film (AQWF) which has improved performance when used in LCDs, in particular in reflective and transflective LCDs, is easy to manufacture, and allows economic fabrication even at large scales, and does not have the drawbacks of prior art compensators as described above. Other aims of the present invention are immediately evident to the person skilled in the art from the following detailed description.

The inventors have found that the above described problems can be solved by providing an AQWF according to claim 1.

### Definition of Terms

In connection with optical polarization, compensation and retardation layers, films or plates as described in the present application, the following definitions of terms as used throughout this application are given.

The term "film" as used in this application includes self-supporting, i.e. free-standing, films that show more or less pronounced mechanical stability and flexibility, as well as coatings or layers on a supporting substrate or between two substrates.

The term "liquid crystal or mesogenic material" or "liquid crystal or mesogenic compound" should denote materials or compounds comprising one or more rod-shaped, board-shaped or disk-shaped mesogenic groups, i.e. groups with the ability to induce liquid crystal phase behaviour. Liquid crystal compounds with rod-shaped or board-shaped groups are also known in the art as "calamitic" liquid crystals. Liquid crystal compounds with a disk-shaped group are also known in the art as "discotic" liquid crystals. The compounds or materials comprising mesogenic groups do not necessarily have to exhibit a liquid crystal phase themselves. It is also possible that they show liquid crystal phase behaviour only in mixtures with other compounds, or when the mesogenic compounds or materials, or the mixtures thereof, are polymerized.

For the sake of simplicity, the term "liquid crystal material" is used hereinafter for both liquid crystal materials and mesogenic materials, and the term 'mesogen' is used for the mesogenic groups of the material.

Polymerizable compounds with one polymerizable group are also referred to as "monoreactive" compounds, compounds with two polymerizable groups as "direactive" compounds, and compounds with more than two polymerizable groups as "multireactive" compounds. Compounds without a polymerizable group are also referred to as "non-reactive" compounds.

The term "director" means the preferred orientation direction of the long molecular axes in case of calamitic compounds, or of the short molecular axis in case of discotic compounds, of the mesogens in a liquid crystal material.

The term "planar structure" or "planar orientation" refers to a layer of optically anisotropic material wherein the optical axis is substantially parallel to the plane of the layer.

In planar optical films or layers comprising uniaxially positive birefringent liquid crystal material with uniform orientation, the direction of the optical axis is given by the director of the liquid crystal material.

The term "uniaxial" refers to a material, film or layer having three principal refractive indices in directions orthogonal to each other, wherein two refractive indices are identical and the third refractive index is different from the other two refractive indices, resulting in a single, unique optic axis.

A retardation film with positive or negative birefringence is also referred to as "positive" or "negative" retardation film, respectively.

The term "quarter wave film" or "QWF" refers to an optical film that creates a phase difference of π/2 between the two orthogonal, linearly-polarized modes propagating in an anisotropic material.

The term "half wave film" or "HWF" refers to an optical film that creates a phase difference of π between the two orthogonal, linearly-polarized modes propagating in an anisotropic material.

In a linear absorption polarizer, unless stated otherwise, the term "polarization axis" refers to the transmission direction of the polarizer, which is at 90 degrees to the absorption direction of the polarizer.

### Summary of the Invention

The present invention relates to an achromatic quarter wave film (AQWF) comprising at least one quarter wave film (QWF) and at least one half wave film (HWF), wherein said at least one QWF and said at least one HWF comprise a polymerized or vitrified liquid crystalline material.

The invention further relates to a method of preparing an AQWF as described above and below.

The invention further relates to the use of an AQWF as described above and below as retardation or compensation film or as light-enhancing or anti-reflection film in optical devices like for example liquid crystal displays (LCD), organic light emitting diodes (OLED) cathode ray tube (CRT) displays or other applications.

The invention further relates to an LCD comprising an AQWF as described above and below.

### Brief Description of the Drawings

Figure 1 illustrates a reflective LCD comprising an AQWF according to the present invention.
Figure 2 illustrates a transmissive LCD comprising two AQWFs according to the present invention.
Figure 3 depicts an AQWF according to example 1 of the present invention.
Figure 4 shows the transmission versus wavelength of the AQWF according to example 1 of the present invention.

### Detailed Description of the Invention

The use of liquid crystal material for the AQWF of the present invention has several advantages, Thus, the LC materials have a high birefringence and thus enable high retardation values already with thin films. Also, the LC materials can be selected fom a wide range of materials which are known to the expert and have a wide range of optical properties like birefringence and dispersion.

Preferably the AQWF according to the present invention comprises one QWF and one HWF.

Preferably the AQWF according to the present invention has a retardation that is substantially a quarter of the wavelength of light incident on said AQWF, when measured at a wavelength of 450 nm, 550 nm and 650 nm, respectively. The term "substantially a quarter of a wavelength" means that the ratio r/λ, wherein r is the retardation of the AQWF and λ is the wavelength of light, is in the range from 0.2 to 0.3, preferably from 0.22 to 0.28, most preferably from 0.24 to 0.26. The retardation r is defined as r = d(nₓ-n_{y}), wherein d is the film thickness and nₓ and n_{y} are the main refractive indices in the plane of the film.

The retardation of the QWF is preferably from 80 to 180 nm, very preferably from 100 to 130 nm , at a wavelength of 550 nm.

The retardation of the HWF is preferably from 200 to 360 nm, very preferably from 220 to 260 nm, at a wavelength of 550 nm.

The thickness of the QWF is preferably from 0.6 to 1.4 µm, very preferably from 0.9 to 1.2 µm.

The thickness of the HWF is preferably from 1.4 to 3 µm, very preferably from 1.6 to 2.2 µm.

The QWF and the HWF are preferably arranged such that their film planes are substantially parallel to each other and their optical axes are oriented at an angle of from 40 to 80 degrees, preferably from 55 to 65, most preferably of 50 degrees relative to each other.

Preferably the QWF and HWF comprise a polymerized or crosslinked liquid crystal polymer film with planar orientation.

Preferably the QWF and HWF are prepared from a polymerizable nematic or smectic, preferably nematic liquid crystal material by in-situ polymerization. In a preferred method of preparation the polymerizable material is coated onto a substrate, aligned into planar orientation and subsequently polymerized for example by exposure to heat or actinic radiation. The preparation of a planar film and its use as QWF is described for example in WO 98/04651, the entire disclosure of which is incorporated into this application by reference.

Very preferably the liquid crystalline or mesogenic materials, compounds and polymers compounds mentioned above and below are selected from calamitic liquid crystalline or mesogenic materials, which provide good optical performance with improved chromaticity, and, especially in case of monomers, can easily and quickly be aligned into planar orientation, which is especially important when manufacturing polymer films at large scale.

Preferably the AQWF further comprises a linear polarizer. For use in LCDs the AQWF and the polarizer are preferably arranged in the sequence Polarizer-HWF-QWF.

The linear polarizer is preferably arranged such that the optical axis of the HWF is oriented at an angle of from 10 to 20 degrees, preferably of 15 degrees, relative to the transmssion direction of the linear polarizer, and/or the optical axis of the QWF is oriented at an angle of from 60 to 80 degrees, preferably of 75 degrees, relative to the transmission direction of the linear polarizer.

The QWF and HWF and optional further optical films like polarizers or further retarders can be laminated together, or connected by means of adhesive layers, like for example TAC or DAC (tri- or diacetylcellulose) films. It is also possible to prepare the films directly onto each other, so that e.g. the QWF is prepared on the HWF serving as substrate, or vice versa, with a suitable aligning layer such as PVA being coated between the two layers and being rubbed at a suitable angle.

Another aspect of the present invention relates to a liquid crystal display comprising at least one AQWF as described above and below.

The AQWF according to the present invention can be used for compensation of conventional displays, in particular those of the TN (twisted nematic), HTN (highly twisted nematic) or STN (super twisted nematic) mode, in AMD-TN (active matrix driven TN) displays, in displays of the IPS (in plane switching) mode, which are also known as 'super TFT' displays, in displays of the DAP (deformation of aligned phases) or VA (vertically aligned) mode, like e.g. ECB (electrically controlled birefringence), CSH (colour super homeotropic), VAN or VAC (vertically aligned nematic or cholesteric) displays, MVA (multi-domain vertically aligned) displays, in displays of the bend mode or hybrid type displays, like e.g. OCB (optically compensated bend cell or optically compensated birefringence), R-OCB (reflective OCB), HAN (hybrid aligned nematic) or pi-cell (π-cell) displays, displays using liquid crystals in the isotropic phase as described for example in WO 02/93244 A1, or organic light emitting diodes (OLED).

Especially preferred are TN, STN, VA, MVA, OCB and pi-cell displays.

Furthermore the AQWF is suitable as light-enhancing or anti-reflection ciruclar polarizer film in LCDs of the above mentioned types or in other displays or optical devices like organic light emitting diodes (OLED) or cathode ray tubes (CRT).

If an AQWF according to the invention is used in an LCD, the contrast ratio of the display is increased compared to the same display containing a chromatic QWF. Another advantage of using an AQWF according to the invention is that the display appears black in the dark state relative to a chromatic QWF. The dark state of a LCD containing a chromatic QWF normally appears coloured when viewed under ambient lighting conditions.

Especially preferred are reflective or transflective LCDs, in particular those of the TN type. Further preferred are transmissive LCDs.

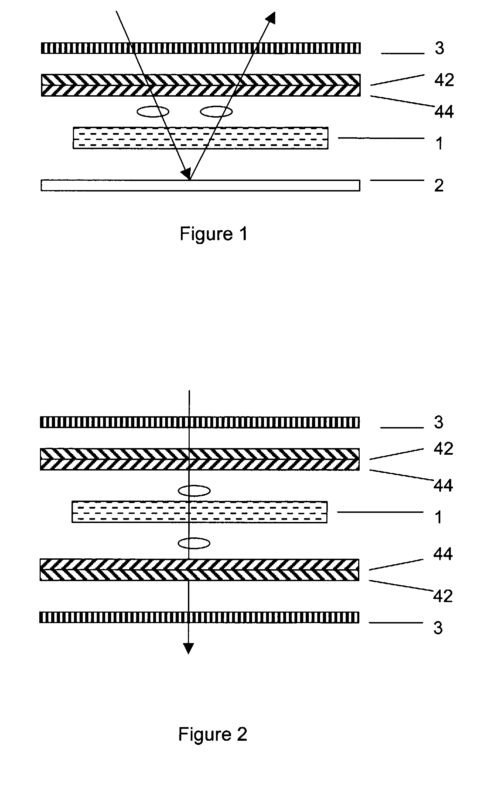

**Figure 1** exemplarily depicts a reflective LCD according to the invention, comprising a switchable liquid crystal cell **1**, like for example a TN cell, a reflective layer **2**, a linear polarizer **3**, and an AQWF according to the invention comprising a HWF **42** and a QWF **44**. The AQWF converts linearly polarized light transmitted through the polarizer **3** into circular polarized light (indicated by the circle), and converts circular polarized light reflected by the reflector **2** and transmitted through the display cell **1** (indicated by the circle) back into linearly polarized light.

**Figure 2** exemplarily depicts a transmissive LCD according to the invention, comprising a switchable liquid crystal cell **1**, like for example a TN cell, two linear polarizers **3**, and two AQWFs according to the invention comprising a HWF **42** and a QWF **44**. The AQWF converts linearly polarized light transmitted through the polarizer **3** into circular polarized light (indicated by the circle), and converts circular polarized light transmitted through the display cell 1 (indicated by the circle) back into linearly polarized light.

Especially preferably the LCD comprises the following elements
- a liquid crystal cell formed by two transparent substrates having surfaces which oppose each other, an electrode layer provided on the inside of at least one of said two transparent substrates and optionally superposed with an alignment layer, and a liquid crystal medium which is present between the two transparent substrates,
- a polarizer arranged outside said transparent substrates, or a pair of polarizers sandwiching said substrates, and
- at least one AQWF according to the present invention, being situated between the liquid crystal cell and at least one of said polarizers,
it being possible for the above elements to be separated, stacked, mounted on top of each other or connected by means of adhesive layers in any combination of these means of assembly.

Alternatively to the method described above it is possible to prepare the QWF and HWF from a readily synthesized liquid crystal (LC) polymer that is applied onto a substrate, for example at a temperature above its glass transition temperature or its melting point, or from solution e.g. in an organic solvent, aligned into planar orientation, and solidified e.g. by evaporating the solvent or by cooling below the glass temperature or melting point of the LC polymer. If for example a LC polymer with a glass temperature that is higher than ambient temperature is used, evaporation of the solvent or cooling leaves a solid LC polymer film. If for example an LC polymer with a high melting point is used, the LC polymer can be applied as a melt onto the substrate which solidifies upon cooling. LC side chain polymers or LC main chain polymers can be used, preferably LC side chain polymers. The LC polymer should preferably be selected such that its glass transition or melting temperature is significantly higher than the operating tempature of the AQWF. For example, LC side chain polymers comprising a polyacrylate, polymethacrylate, polysiloxane, polystyrene or epoxide backbone with laterally attached mesogenic side chains can be used. The LC polymer may also comprise side chains with reactive groups that can be crosslinked after or during evaporation of the solvent to permanently fix the orientation. The LC polymer may also be subjected to mechanical or heat treatment after application to the substrate to improve alignment. The above methods and suitable materials therefor are known to the person skilled in the art.

Especially preferably the QWF and HWF are prepared from a polymerizable liquid crystal material by in-situ polymerization. The polymerizable liquid crystal material preferably comprises at least one monoreactive achiral polymerizable mesogenic compound and at least one di- or multireactive achiral polymerizable mesogenic compound.

If di- or multireactive compounds are present in the polymerizable material, a three-dimensional polymer network is formed and the planar orientation of the LC material is permanently fixed. An optical retardation film made of such a network is self-supporting and shows a high mechanical and thermal stability and a low temperature dependence of its physical and optical properties.

By varying the concentration of the di- and multireactive compounds the crosslink density of the polymer film and thereby its physical and chemical properties such as the glass transition temperature, which is also important for the temperature dependence of the optical properties of the optical retardation film, the thermal and mechanical stability or the solvent resistance can be tuned easily.

A preferred polymerizable LC mixture comprises
- 10 - 80 % of one or more direactive achiral mesogenic compounds,
- 5 - 80 % of one or more monoreactive achiral mesogenic compounds,
- 0 to 10 % of one or more chain transfer agents,
- 0 to 3 % of one or more surfactants,
- 0.1 to 10 % of one or more photoinitiators.

The polymerizable mesogenic mono-, di- or multireactive compounds used for the instant invention can be prepared by methods which are known per se and which are described, for example, in standard works of organic chemistry such as, for example, Houben-Weyl, Methoden der organischen Chemie, Thieme-Verlag, Stuttgart. Typical examples are described for example in WO 93/22397; EP 0 261 712; DE 19504224; DE 4408171 and DE 4405316. The compounds disclosed in these documents, however, are to be regarded merely as examples that do not limit the scope of this invention.

Examples representing especially useful mono- and direactive calamitic polymerizable mesogenic compounds are shown in the following list of compounds, which should, however, be taken only as illustrative and is in no way intended to restrict, but instead to explain the present invention:

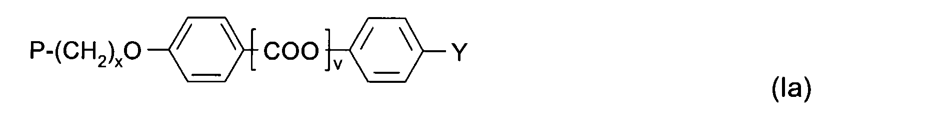

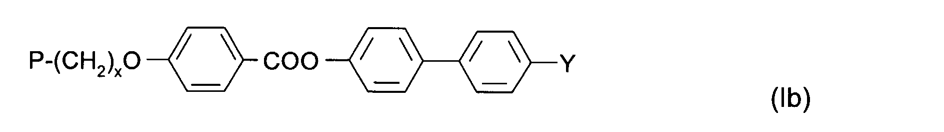

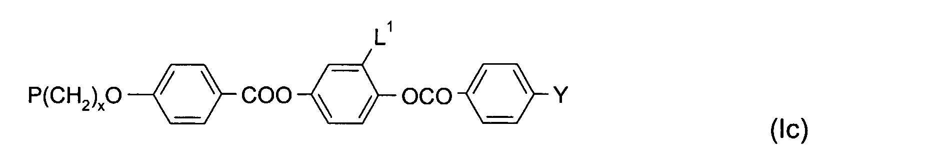

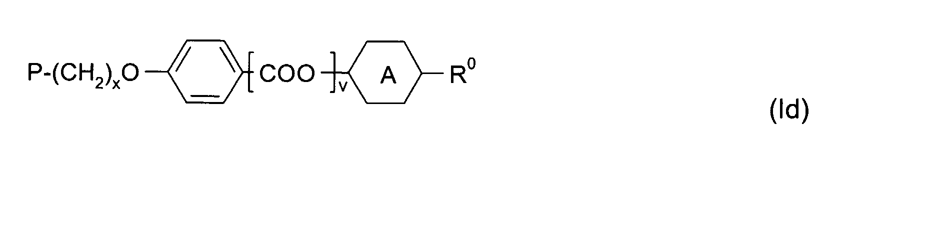

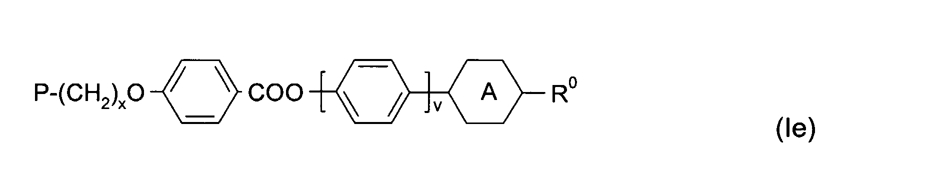

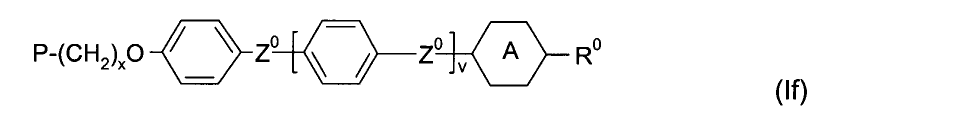

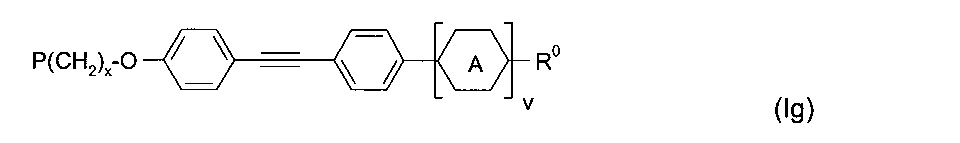

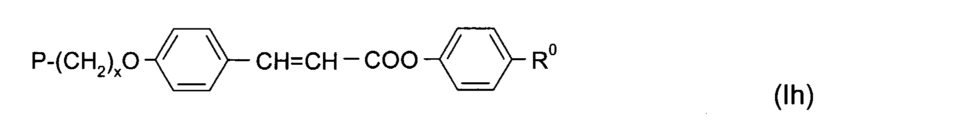

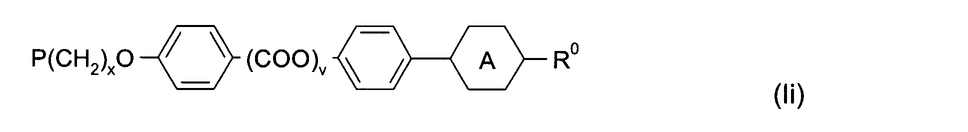

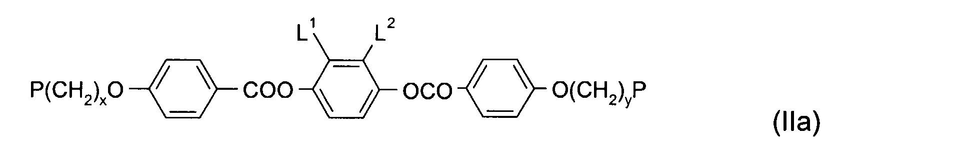

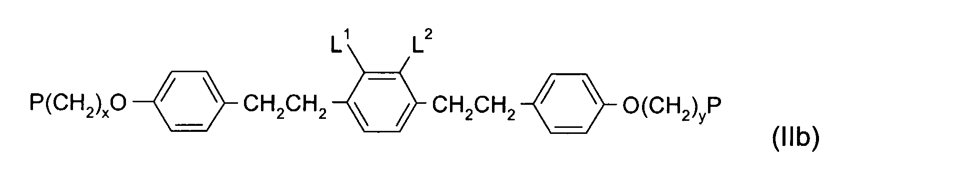

In the above formulae, P is a polymerizable group, preferably an acryl, methacryl, vinyl, vinyloxy, propenyl ether, epoxy or styrene group, x and y are each independently 1 to 12 , A is 1,4-phenylene that is optionally mono- di or trisubstituted by L¹ or 1,4-cyclohexylene, v is 0 or 1, Z° is -COO-, -OCO-, -CH₂CH₂-, -C≡C- or a single bond, Y is a polar group, R° is an non-polar alkyl or alkoxy group, and L¹ and L² are each independently H, F, Cl, CN or an optionally halogenated alkyl, alkoxy, alkylcarbonyl, alkoxycarbonyl or alkoxycarbonyloxy group with 1 to 7 C atoms.

The term 'polar group' in this connection means a group selected from F, Cl, CN, NO₂, OH, OCH₃, OCN, SCN, an optionally fluorinated carbonyl or carboxyl group with up to 4 C atoms or a mono- oligo- or polyfluorinated alkyl or alkoxy group with 1 to 4 C atoms. The term 'non-polar group' means an alkyl group with 1 or more, preferably 1 to 12 C atoms or an alkoxy group with 2 or more, preferably 2 to 12 C atoms.

As a substrate for the preparation of the polymer films for example a glass or quarz sheet or a plastic film or sheet can be used. It is also possible to put a second substrate on top of the coated mixture prior to and/or during and/or after polymerization. The substrates can be removed after polymerization or not. When using two substrates in case of curing by actinic radiation, at least one substrate has to be transmissive for the actinic radiation used for the polymerization. Isotropic or birefringent substrates can be used. In case the substrate is not removed from the polymerized film after polymerization, preferably isotropic substrates are used.

Preferably at least one substrate is a plastic substrate such as for example a film of polyester such as polyethyleneterephthalate (PET) or polyethylenenaphthalate (PEN), of polyvinylalcohol (PVA), polycarbonate (PC) or triacetylcellulose (TAC), especially preferably a PET film or a TAC film. As a birefringent substrate for example an uniaxially stretched plastic film can be used. For example PET films are commercially available from DuPont Teijin Films under the trade name Melinex ®.

The polymerizable material can also be dissolved in a solvent, preferably in an organic solvent. The solution is then coated onto the substrate, for example by spin-coating or other known techniques, and the solvent is evaporated off before polymerization. In most cases it is suitable to heat the mixture in order to facilitate the evaporation of the solvent.

Polymerization of the LC material is preferably achieved by exposing it to actinic radiation. Actinic radiation means irradiation with light, like UV light, IR light or visible light, irradiation with X-rays or gamma rays or irradiation with high energy particles, such as ions or electrons. Preferably polymerization is carried out by photoirradiation, in particular with UV light, very preferably with linear polarized UV light. As a source for actinic radiation for example a single UV lamp or a set of UV lamps can be used. When using a high lamp power the curing time can be reduced. Another possible source for photoradiation is a laser, like e.g. a UV laser, an IR laser or a visible laser.

Polymerization is carried out in the presence of an initiator absorbing at the wavelength of the actinic radiation. For example, when polymerizing by means of UV light, a photoinitiator can be used that decomposes under UV irradiation to produce free radicals or ions that start the polymerization reaction. UV photoinitiators are preferred, in particular radicalic UV photoinitiators. As standard photoinitiator for radical polymerization for example the commercially available Irgacure® 651, Irgacure® 184, Darocure® 1173 or Darocure® 4205 (all from Ciba Geigy AG) can be used, whereas in case of cationic photopolymerization the commercially available UVI 6974 (Union Carbide) can be used.

The polymerizable LC material can additionally comprise one or more other suitable components such as, for example, catalysts, sensitizers, stabilizers, chain-transfer agents, inhibitors, co-reacting monomers, surface-active compounds, lubricating agents, wetting agents, dispersing agents, hydrophobing agents, adhesive agents, flow improvers, defoaming agents, deaerators, diluents, reactive diluents, auxiliaries, colourants, dyes or pigments.

In another preferred embodiment the mixture of polymerizable material comprises up to 70%, preferably 1 to 50 % of a monoreactive non-mesogenic compound with one polymerizable functional group. Typical examples are alkylacrylates or alkylmethacrylates.

It is also possible, in order to increase crosslinking of the polymers, to add up to 20% of a non-mesogenic compound with two or more polymerizable functional groups to the polymerizable LC material alternatively or in addition to the di- or multireactive polymerizable mesogenic compounds to increase crosslinking of the polymer. Typical examples for direactive non-mesogenic monomers are alkyldiacrylates or alkyldimethacrylates with alkyl groups of 1 to 20 C atoms. Typical examples for multireactive non-mesogenic monomers are trimethylpropanetrimethacrylate or pentaerythritoltetraacrylate.

It is also possible to add one or more chain transfer agents to the polymerizable material in order to modify the physical properties of the inventive polymer film. Especially preferred are thiol compounds, such as monofunctional thiol compounds like e.g. dodecane thiol or multifunctional thiol compounds like e.g. trimethylpropane tri(3-mercaptopropionate), very preferably mesogenic or liquid crystalline thiol compounds. When adding a chain transfer agent, the length of the free polymer chains and/or the length of the polymer chains between two crosslinks in the inventive polymer film can be controlled. When the amount of the chain transfer agent is increased, the polymer chain length in the obtained polymer film is decreasing.

Planar alignment can be achieved for example by shearing the material, e.g. by means of a doctor blade. It is also possible to apply an alignment layer, for example a layer of rubbed polyimide or sputtered SiOₓ, on top of at least one of the substrates. Planar alignment can also be achieved by rubbing the substrate without applying an additional alignment layer, e.g. by means of a rubbing cloth or a rubbing roller. If a rubbed substrate is used for the preparation of a QWF or HQWF according to the invention, the direction of the optical axis of the QWF and the HWF usually corresponds to the rubbing direction of the substrate.

Planar alignment with a low tilt angle can also be achieved or enhanced by adding one or more surfactants to the polymerizable mesogenic material. Suitable surfactants are described for example in J. Cognard, Mol.Cryst.Liq.Cryst. **78,** Supplement 1, 1-77 (1981). Particularly preferred are non-ionic surfactants, e.g. non-ionic fluorocarbon surfactants, like the commercially available Fluorad® (from 3M), or Zonyl FSN ® (from DuPont).

The examples below serve to illustrate the invention without limiting it. In the foregoing and the following, all temperatures are given in degrees Celsius, and all percentages are by weight, unless stated otherwise.

### Example 1

The following polymerizable mixture was prepared

| | |
|---|---|
| Compound (1) | 42.25% |
| Compound (2) | 32.86 % |
| Compound (3) | 18.78 % |
| Irgacure 907 ® | 5.63 % |
| FC171® | 0.48 % |

Irgacure 907 is a photoinitiator commercially available from Ciba AG (Basel, Switzerland). FC171® is a non-polymerizable fluorocarbon surfactant commercially available from 3M (St. Paul, Minnesota, USA).

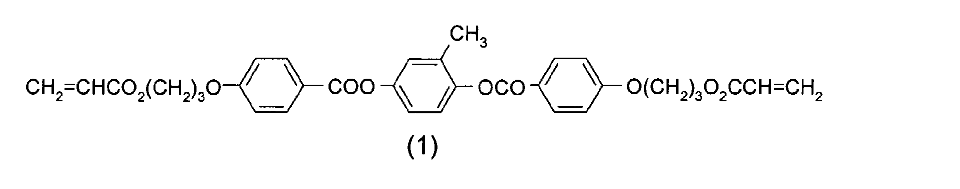

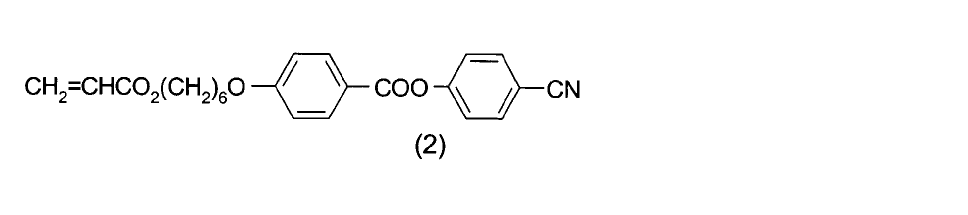

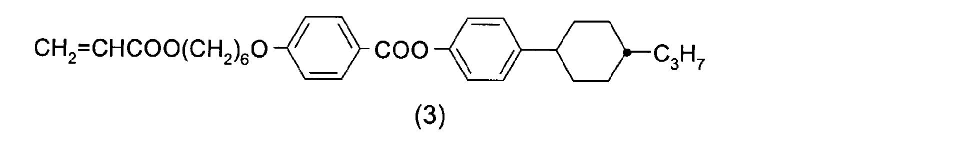

A QWF and a HWF were prepared from the above mixture by coating onto a rubbed substrate and curing under UV light, as described in WO 98/04651. The QWF has a thickness of 0.83µm and a retardation of 125nm. The HWF has a thickness of 1.66µm and a retardation of 250 nm, measured at a wavelength of 550 nm.

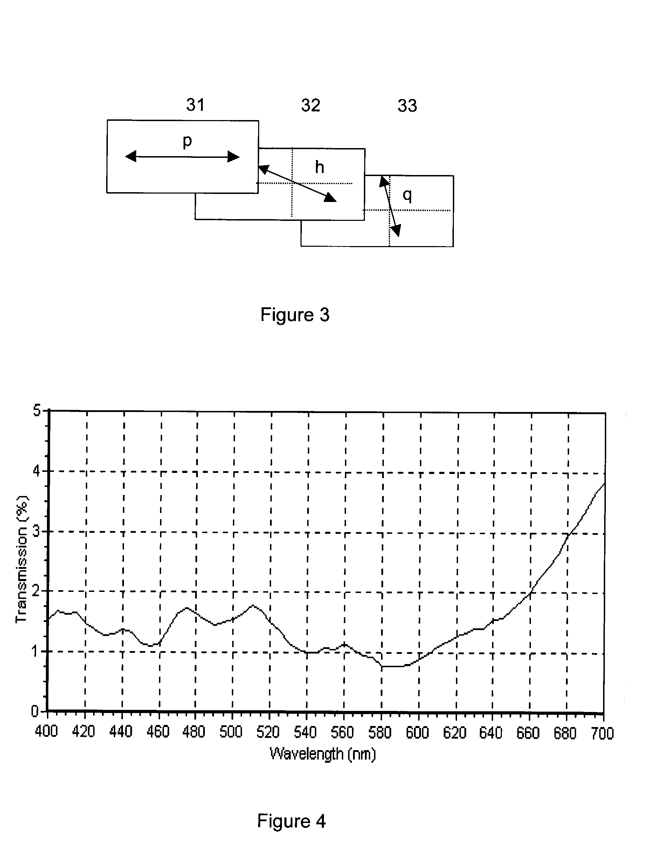

An AQWF was formed from the above films as depicted in **Figure 3**, with the QWF **33** and HWF **32** laminated to a standard linear absorption polarizer **31**. The rubbing direction q of the substrate of the QWF **33** and the rubbing direction h of the substrate of the HWF **32**, which correspond to the direction of the optical axis of the QWF and HWF, are oriented at an angle of 15° (h) and 75° (q), respectively, to the polarizer transmission direction p.

The reflection spectrum of the AQWF was measured and is depicted in Figure 4. The AQWF has a low reflection across the visible spectrum. Further reductions in reflectance can be achieved by a suitable anti reflective or anti glare layer on the polarizer.

## Claims

1. Achromatic quarter wave film (AQWF) comprising at least one quarter wave film (QWF) and at least one half wave film (HWF), **characterized in that** said at least one QWF and said at least one HWF comprise a polymerized or vitrified liquid crystalline material.

2. AQWF according to claim 1, **characterized in that** the liquid crystalline material comprises calamitic liquid crystalline or mesogenic molecules.

3. AQWF according to claim 1 or 2, **characterized in that** it has a retardation that is substantially a quarter of the wavelength of light incident on said AQWF, when measured at a wavelength of 450 nm, 550 nm and 650 nm, respectively.

4. AQWF according to at least one of claims 1 to 3, **characterized in that** the QWF has an optical retardation of from 80 to 180 nm at a wavelength of 550 nm, and the HWF has an optical retardation of from 200 to 360 nm at a wavelength of 550 nm.

5. AQWF according to at least one of claims 1 to 4, **characterized in that** the thickness of the QWF is from 0.6 to 1.4 µm and the thickness of the HWF is from 1.4 to 3 µm.

6. AQWF according to at least one of claims 1 to 5, **characterized in that** the QWF and the HWF comprise a crosslinked nematic liquid crystal material.

7. AQWF according to at least one of claims 1 to 6, **characterized in that** the QWF and the HWF are arranged such that their film planes are substantially parallel to each other and their optical axes are oriented at an angle of from 40 to 80 degrees relative to each other.

8. AQWF according to claim 7, **characterized in that** the optical axes of the QWF and HWF are oriented at an angle of from 55 to 65 degrees relative to each other.

9. AQWF according to at least one of claims 1 to 8, **characterized in that** it further comprises a linear polarizer arranged at the side facing the HWF.

10. AQWF according to claim 9, **characterized in that** the optical axis of the HWF is oriented at an angle of from 10 to 20 degrees relative to the transmission direction of the linear polarizer, and/or the optical axis of the QWF is oriented at an angle of from 60 to 80 degrees relative to the polarization transmission direction of the linear polarizer.

11. Use of an AQWF according to at least one of claims 1 to 10 in electrooptical displays, liquid crystal displays, organic light emitting diodes (OLED) or cathode ray tube (CRT) displays, as light-enhancing or anti-reflection film for displays or other applications.

12. Liquid crystal display comprising an AQWF according to at least one of claims 1 to 10.

13. Liquid crystal display according to claim 12, **characterized in that** is a display of the TN (twisted nematic), OCB (optically compensated bend), pi-cell, VA (vertically aligned) or MVA (multi-domain vertically aligned) mode.

14. Liquid crystal display according to claim 12 or 13, **characterized in that** is a reflective or transflective display.
